# EUROPEAN PATENT SPECIFICATION

(11) **EP 2 273 649 B1**
(45) Date of publication and mention of the grant of the patent: **19.09.2012**
(21) Application number: 09165236.2
(22) Date of filing: 10.07.2009
(51) Int. Cl.: H02J 3/42

(54) **Method for synchronising an electric machine with an electric grid and arrangement of an electric machine and an electric grid**
Verfahren zur Synchronisierung einer elektrischen Maschine mit einem elektrischen Gitter und Anordnung einer elektrischen Maschine und elektrisches Gitter
Procédé de synchronisation d'une machine électrique avec un réseau électrique et agencement d'une machine électrique et réseau électrique

(43) Date of publication of application: 12.01.2011
(73) Proprietor: Alstom Technology Ltd, 5400 Baden (CH)
(72) Inventor: Schütte, Thomas, 5417 Untersiggenthal (CH); Hug, Roland, 8852 Altendorf (CH)

(56) References cited:
- WO-A-2005/112248
- AT-B- 286 459
- DE-C- 709 686
- VOLTZ D A ET AL: "Are there risks associated with testing turbine-generator sets prior to acceptance? Mr. Murphy thinks so" PETROLEUM AND CHEMICAL INDUSTRY TECHNICAL CONFERENCE, 2004. FIFTY-FIRS T ANNUAL CONFERENCE 2004 SAN FRANCISCO, CA, USA 13-15 SEPT. 2004, PISCATAWAY, NJ, USA,IEEE, US, 13 September 2004 (2004-09-13), pages 249-258, XP010738599 ISBN: 978-0-7803-8698-3

## Description

### TECHNICAL FIELD

The present invention relates to a method for synchronising an electric machine with an electric grid and an arrangement of an electric machine and an electric grid. In the following reference to a generator will be made, but it is clear that the method and arrangement of the invention may also be used with different electric machines such as in particular electric motors.

### BACKGROUND OF THE INVENTION

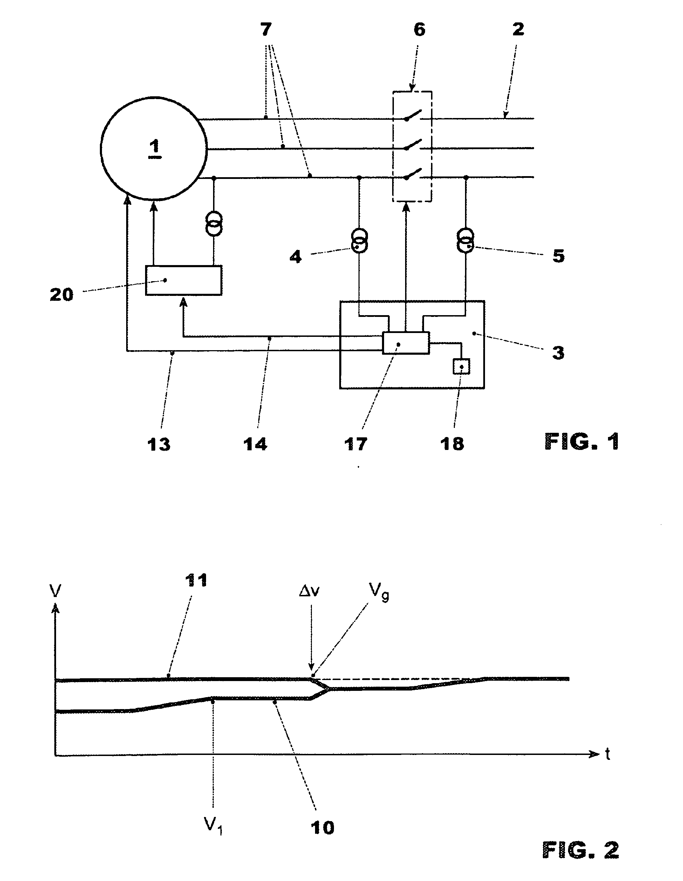

With reference to figure 1, in order to correctly connect synchronous machines such as electric generators 1 to an electric grid 2, a synchroniser 3 is provided that measures (via measuring transformers 4, 5) the voltage, frequency and phase of the generator 1 and grid 2 and causes a breaker 6 to connect them each other only when these parameters are as close to each other as possible.

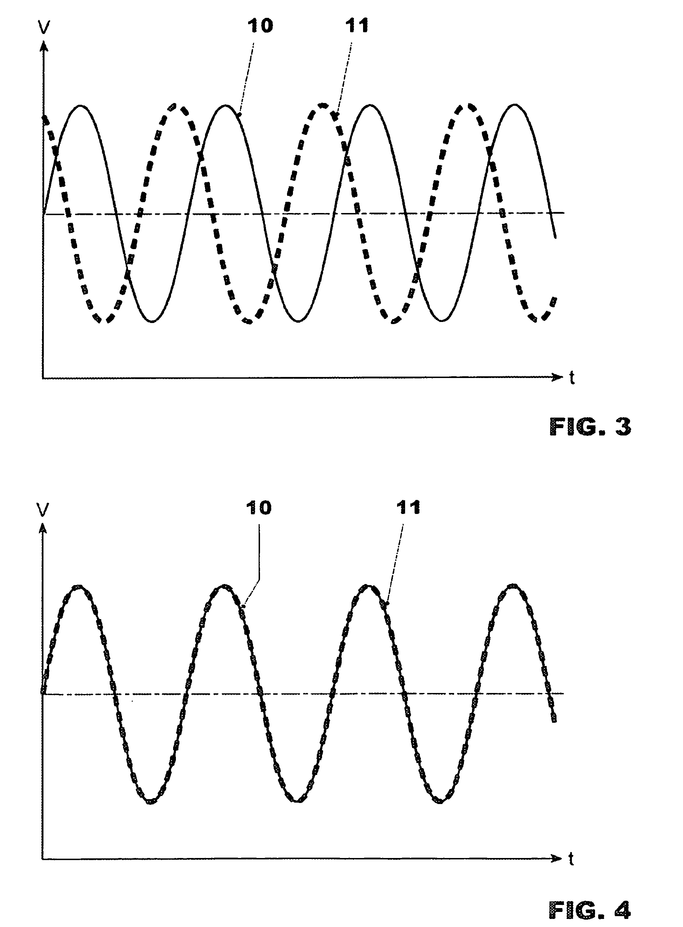

In other words, as shown in figure 4 that shows the voltage V of the generator (continuous line 10) and grid (dashed line 11) with respect to the time t, the breaker is closed when the curves 10 and 11 overlap one another.

Nevertheless, during erection or maintenance of the system, the risk exists that the electric conductors 7 connecting the generator 1 to the breaker 6 or also the conductors of the measuring transformers 4, 5 are interchanged.

If this occurs, when the generator 1 and the grid 2 are connected to one another, even if the synchroniser 3 measures the same voltage, the same frequency and the same phase between the generator 1 and grid 2, the phase is actually not the same, but is switched in the worst case by 120° (three phase voltages).

In other words, as shown in figure 3 that shows the voltage of the generator 1 (continuous line 10) and grid 2 (dashed line 11) with respect to the time, in case the electric conductors 7 or the conductors of the measuring transformers 4, 5 are interchanged, when the breaker 6 is closed the voltage and frequency are the same, but the phase is shifted by 120° ("faulty synchronising").

This difference in phase causes the shaft of the generator 1 to undergo a large torque impact when the breaker 6 is closed, that tends to bring the generator shaft in phase with the grid.

Therefore, the shafts of synchronous machines such as generators are designed to withstand such a large torque impact.

DE 709 686 discloses a device for connecting together grids or machines, when their voltage is the same.

### SUMMARY OF THE INVENTION

The technical aim of the present invention is therefore to provide a method and an arrangement by which the said problems of the known art are sensibly reduced.

Within the scope of this technical aim, an object of the invention is to provide a method and an arrangement that let the torque impact on the shaft of the synchronous machine (such as a generator), in case of faulty synchronising, be low and in particular lower than that with traditional synchronising methods.

A further object of the invention is that of providing a method and an arrangement that let the synchronous machine shaft be smaller and in general designed so as to withstand lower torque than according to the prior art.

The technical aim, together with these and further objects, are attained according to the invention by providing a method in accordance with the accompanying claims.

### BRIEF DESCRIPTION OF THE DRAWINGS

Further characteristics and advantages of the invention will be more apparent from the description of a preferred but non-exclusive embodiment of the method according to the invention, illustrated by way of nonlimiting example in the accompanying drawings, in which:
Figure 1 is a schematic view of a generator and a grid to be connected together;
Figure 2 is a diagram showing the course of the generator and grid voltage before and after mutual connection; and
Figures 3 and 4 are two diagrams showing the course of the voltage, frequency and phase of the generator and grid with respect to time, before mutual connection, respectively in case of faulty synchronising and synchronising.

### DETAILED DESCRIPTION OF THE INVENTION

The generator 1 driven by a motor (such as but not limited to a gas or steam turbine) rotates, nevertheless it is not connected to the grid 2; i.e. the breaker 6 (for example having three poles) is open.

The voltage of the generator 1 is different from that of the grid and its frequency and phases are also different from those of the grid 2.

Before the breaker 6 is closed and the generator 1 is connected to the grid 2, the generator 1 must be synchronised with the grid 2.

The method for synchronising the electric generator 1 with the electric grid 2 comprises the steps of synchronising the frequency of the generator 1 with the frequency of the grid 2.

In this respect the synchroniser 3 measures via the measuring transformers 4, 5 the frequency of the generator 1 and grid 2 and drives the generator 1 (via a control line 13) in order to make its frequency equal to that of the grid 2.

In the drawings the transformers 4, 5 are shown only connected to a conductor 7 or a single phase of the grid 2; it is anyhow clear that this is a schematic sketch and in different embodiment this connection may be implemented to one or more conductors or phases according to the needs.

During or also before or after this step, the voltage of the generator 1 is increased towards the voltage of the grid 2.

In this respect, the synchroniser 3 (via the transformers 4, 5) also measures the voltages of the generator 1 and grid 2 and drives an AVR 20 (Automatic Voltage regulator) via a control line 14 such as to increase the voltage of the generator 1.

As shown in figure 2, the voltage of the generator 1 is increased up to a first value V₁ lower than the voltage V_{g} of the grid 2, such that at the end of this step a difference Δv exists between the voltage of the generator 1 and the voltage of the grid 2.

When the voltage of the generator 1 reaches the first value V₁ and the generator phase is the same as the grid phase (measured by the synchroniser via the transformer 4, 5), the breaker 6 is closed and the generator 1 is connected to the grid 2.

In case the connector 7 or the conductors of the measuring transformers 4, 5 have been interchanged with one another, when the breaker 6 is closed a difference between the generator phase and the grid phase exists (this difference being 120°); this causes the shaft of the generator to undergo a torque impact.

Nevertheless, surprisingly, according to the method of the invention the torque impact on the shaft in case of faulty synchronising is much lower than with traditional methods.

Preferably, the phase of the generator 1 is synchronised with the phase of the grid 2 after the voltage of the generator 1 has reached the first value V₁ and before the generator 1 has been connected to the grid 2.

After the generator 1 has been connected to the grid 2, (figure 2), the voltage of the generator 1 can be increased up to the original voltage of the grid 2.

The first voltage value V₁ is lower than the grid voltage V_{g} by between 5-20% and preferably by between 10-15%.

Simulations showed that these ranges let the torque impact on the shaft be sensibly reduced in case of faulty synchronising (with 120° phase shifting) while still guaranteeing the safe operation of the generator 1 and grid 2.

The method of the invention may be implemented using two different measuring transformers 4, 5.

In particular the transformers 4, 5 should provide the same secondary voltage (for example 100 V) with different primary voltages (for example, if the grid has 15000 V, the primary voltage of the measuring transformer 4 could be 14000 V and that of the measuring transformer 5 could be 15000 V).

Thus the measuring transformers 4, 5 should provide the same secondary voltage with different primary voltages, the primary voltage of the measuring transformer 4 connected to the generator 1 being smaller than that of the measuring transformer 5 connecter to the electric grid 2.

In other examples, the method of the invention may be implemented with the AVR 20 (Automatic Voltage Regulator) provided with or connected to a memory wherein the V₁ voltage is stored.

In this case the AVR instead of driving the generator such that its output voltage is as close as possible to the grid voltage V_{g}, drives it such that its voltage is as close as possible to the V₁ voltage.

In a further example, the method of the invention may be implemented with a synchroniser 3 that comprises a control unit 17 and a memory 18 (connected or embedded in the control unit 17) wherein the first voltage value V₁ is stored.

The synchroniser 3 can thus compare the generator voltage (measured through the measuring transformer 4) with the grid voltage (measured through the measuring transformer 5) and drive the generator 1 for synchronising its frequency with that of the electric grid 2 and regulating its voltage increasing it towards the voltage of the electric grid 2.

Moreover, the synchroniser (through the control unit 17) causes the breaker 6 to connect the generator 1 to the grid 2 when the voltage of the generator 1 reaches the first value V₁ lower than the voltage of the grid 2.

The method and the synchroniser conceived in this manner are susceptible to numerous modifications and variants, all falling within the scope of the inventive concept which is defined by the claims. Moreover all details can be replaced by technically equivalent elements.

In practice the materials used and the dimensions can be chosen at will according to requirements and to the state of the art.

### REFERENCE NUMBERS

- 1: generator
- 2: grid
- 3: synchroniser
- 4, 5: measuring transformer
- 6: breaker
- 7: conductors
- 10: generator voltage
- 11: grid voltage
- 13: control line for frequency
- 14: control line for the voltage (AVR)
- 17: control unit
- 18: memory
- 20: AVR (Automatic Voltage Regulator)
- V₁: first voltage
- V_{g}: grid voltage
- Δv: differential voltage

## Claims

1. Method for synchronising an electric machine (1) with an electric grid (2) comprising synchronising the frequency of the machine (1) with that of the grid (2) and regulating the voltage of the electric machine (1) towards the voltage of the grid (2), **characterised by** connecting the electric machine (1) to the grid (2) when the voltage of the electric machine (1) reaches a first value (V₁) lower than the grid voltage (V_{g}) and that the first voltage value (V₁) is lower than the grid voltage (V_{g}) by between 5-20% and preferably by between 10-15%.

2. Method as claimed in claim 1, **characterised by** synchronising the phase of the electric machine (1) with the phase of the grid (2).

3. Method as claimed in claim 2, **characterised in that** the phase of the machine (1) is synchronised with that of the grid (2) after the voltage of the electric machine has reached the first voltage value (V₁) and before the electric machine (1) is connected to the grid (2).

4. Method as claimed in claim 1, **characterised by** increasing the voltage of the electric machine (1) after it has been connected to the grid (2) up to voltage of the grid (2).

5. Method as claimed in claim 1, **characterised in that** the electric machine (1) is an electric generator.

6. Arrangement of an electric machine (1) and an electric grid (2) with a breaker (6) interposed between them and a synchroniser (3) connected to the electric machine (1) upstream of the breaker (6) and to the electric grid (2) downstream of the breaker (6) via measuring transformers (4, 5), and further connected to the electric machine (1) to drive it, **characterised in that** an AVR (20) is provided with or connected to a memory wherein a V₁ voltage is stored being lower than the grid voltage, that the first voltage value (V₁) is lower than the grid voltage (V_{g}) by between 5-20% and preferably by between 10-15% such that the AVR (20) drives the electric machine (1) such that its voltage is as close as possible to the (V₁) voltage.

7. Arrangement as claimed in claim 6, **characterised in that** the electric machine (1) is an electric generator.

## Patentansprüche

1. Verfahren zum Synchronisieren einer elektrischen Maschine (1) mit einem elektrischen Versorgungsnetz (2), das Folgendes umfasst: Synchronisieren der Frequenz der elektrischen Maschine (1) mit jener des Versorgungsnetzes (2) und Regulieren der Spannung der elektrischen Maschine (1) zu der Spannung des Versorgungsnetzes (2), **gekennzeichnet durch** Verbinden der elektrischen Maschine (1) mit dem Versorgungsnetz (2), wenn die Spannung der elektrischen Maschine (1) einen ersten Wert (V₁), der niedriger als die Versorgungsnetzspannung (V_{g}) ist, erreicht, und **dadurch**, dass der erste Spannungswert (V₁) um 5-20 % und vorzugsweise um 10-15 % niedriger ist als die Versorgungsnetzspannung (V_{g}).

2. Verfahren nach Anspruch 1, **gekennzeichnet durch** Synchronisieren der Phase der elektrischen Maschine (1) mit der Phase des Versorgungsnetzes (2).

3. Verfahren nach Anspruch 2, **dadurch gekennzeichnet, dass** die Phase der elektrischen Maschine (1) mit jener des Versorgungsnetzes (2) synchronisiert wird, nachdem die Spannung der elektrischen Maschine den ersten Spannungswert (V₁) erreicht hat und bevor die elektrische Maschine (1) mit dem Versorgungsnetz (2) verbunden wird.

4. Verfahren nach Anspruch 1, **gekennzeichnet durch** Erhöhen der Spannung der elektrischen Maschine (1), nachdem sie mit dem Versorgungsnetz (2) verbunden worden ist, auf eine Spannung des Versorgungsnetzes (2).

5. Verfahren nach Anspruch 1, **dadurch gekennzeichnet, dass** die elektrische Maschine (1) ein elektrischer Generator ist.

6. Anordnung aus einer elektrischen Maschine (1) und einem elektrischen Versorgungsnetz (2), wobei zwischen diese ein Unterbrecher (6) geschaltet ist und ein Synchronisierer (3) mit der elektrischen Maschine (1) vor dem Unterbrecher (6) und mit dem elektrischen Versorgungsnetz (2) hinter dem Unterbrecher (6) über Messtransformatoren (4, 5) verbunden ist und ferner mit der elektrischen Maschine (1) verbunden ist, um sie anzusteuern, **dadurch gekennzeichnet, dass** zusammen mit einem Speicher, in dem eine V₁-Spannung gespeichert ist, die niedriger als die Versorgungsnetzspannung ist, ein AVR (20) vorgesehen oder damit verbunden ist und dadurch, dass der erste Spannungswert (V₁) um 5-20 % und vorzugsweise um 10-15 % niedriger ist als die Versorgungsnetzspannung (Vg), so dass der AVR (20) die elektrische Maschine (1) in der Weise ansteuert, dass ihre Spannung so nahe wie möglich bei der (V₁) -Spannung liegt.

7. Anordnung nach Anspruch 6, **dadurch gekennzeichnet, dass** die elektrische Maschine (1) ein elektrischer Generator ist.

## Revendications

1. Procédé pour synchroniser une machine électrique (1) avec un réseau électrique (2) comprenant la synchronisation de la fréquence de la machine électrique (1) avec celle du réseau (2) et la régulation de la tension de la machine électrique (1) vers la tension du réseau (2), **caractérisé par** la connexion de la machine électrique (1) au réseau (2) lorsque la tension de la machine électrique (1) atteint une première valeur (V₁) plus basse que la tension du réseau (Vg) et en ce que la première valeur de tension (V₁) est plus basse que la tension du réseau (Vg) d'un pourcentage situé entre 5 et 20 % et de préférence entre 10 et 15 %.

2. Procédé selon la revendication 1, **caractérisé par** la synchronisation de la phase de la machine électrique (1) avec la phase du réseau (2).

3. Procédé selon la revendication 2, **caractérisé en ce que** la phase de la machine électrique (1) est synchronisée avec celle du réseau (2) après que la tension de la machine électrique a atteint la première valeur de tension (V₁) et avant que la machine électrique (1) soit connectée au réseau (2).

4. Procédé selon la revendication 1, **caractérisé par** l'augmentation de la tension de la machine électrique (1) après qu'elle a été connectée au réseau (2) jusqu'à la tension du réseau (2).

5. Procédé selon la revendication 1, **caractérisé en ce que** la machine électrique (1) est une génératrice électrique.

6. Agencement d'une machine électrique (1) et d'un réseau électrique (2) avec un disjoncteur (6) interposé entre eux et un synchroniseur (3) connecté à la machine électrique (1) en amont du disjoncteur (6) et au réseau électrique (2) en aval du disjoncteur (6) via des transformateurs de mesure (4, 5), et connecté en outre à la machine électrique (1) pour la commander, **caractérisé en ce qu'**un AVR (20) est pourvu d'une mémoire ou connecté à celle-ci, mémoire dans laquelle est stockée une tension V₁ plus basse que la tension du réseau, et **en ce que** la première valeur de tension (V₁) est plus basse que la tension du réseau (Vg) d'un pourcentage situé entre 5 et 20 % et de préférence entre 10 et 15 %, de manière à ce que l'AVR (20) commande la machine électrique (1) de sorte que sa tension soit la plus proche possible de la tension (V₁).

7. Agencement selon la revendication 6, **caractérisé en ce que** la machine électrique (1) est une génératrice électrique.
